# EUROPÄISCHE PATENTSCHRIFT

(11) **EP 3 623 268 B1**
(45) Veröffentlichungstag und Bekanntmachung des Hinweises auf die Patenterteilung: **18.01.2023**
(21) Anmeldenummer: 19180824.5
(22) Anmeldetag: 18.06.2019
(51) Int. Cl.: B62J 11/00, B62K 19/40, B62M 6/90

(54) **BATTERIEHALTERUNG FÜR EIN ELEKTROFAHRRAD**
BATTERY MOUNT FOR AN ELECTRIC BICYCLE
SUPPORT DE BATTERIE POUR UNE BICYCLETTE ÉLECTRIQUE

(30) Priorität: 12.09.2018 DE 102018215524
(43) Veröffentlichungstag der Anmeldung: 18.03.2020
(73) Patentinhaber: Robert Bosch GmbH, 70442 Stuttgart (DE)
(72) Erfinder: Schumacher, Christoph, 72144 Dusslingen (DE); Mehlo, Dennis, 72762 Reutlingen (DE); Bayer, Lisa, 70563 Stuttgart (DE); Jabs, Volker, 72144 Dusslingen (DE); Koeder, Thilo, 70839 Gerlingen (DE); Alisic, Haris, 72770 Reutlingen (DE)

(56) Entgegenhaltungen:
- EP-A1- 3 130 513
- WO-A1-2018/016949
- CN-B- 104 118 522
- CN-U- 204 096 021

## Beschreibung

### Stand der Technik

Die Erfindung geht aus von einer Batteriehalterung für ein Elektrofahrrad mit einem ersten Halteelement und einem zweiten Halteelement zum Halten einer dazwischen angeordneten Batterie, wobei das erste Halteelement erste Befestigungsmittel zur Befestigung an einem Fahrradrahmen aufweist, wobei das zweite Halteelement zweite Befestigungsmittel zur Befestigung an dem Fahrradrahmen aufweist.

Es gibt Elektrofahrrad Batterien und Batterie Halterungen für Rahmenbatterien. Dies sind Batterien welche aus optischen Gründen im Fahrradrahmen verstaut werden (ab sofort als Tube Batterie benannt).

Haltesystem für solche Tube-Batterien werden immer in zwei Komponenten getrennt, ein erstes Halteelement und ein zweites Halteelement. Bestimmte Funktionen werden auf eine Seite ausgelagert. Beispielsweise beinhaltet das erste Halteelement ein Schloss zum Verriegeln, und das zweite Halteelement beinhaltet einen elektrischen Steckkontakt.

Die Montage dieser zweiteiligen Haltersysteme erfolgt in zwei Schritten. Dabei wird meist eine Montagelehre zu Ausrichtung und Positionierung der beiden Teile verwendet. Fahrradrahmen sind meist sehr verzogen und weisen keine linearen Flächen auf. Die zwei Batterie Halterteile werden unabhängig voneinander am Fahrradrahmen positioniert und befestigt. Es besteht während der Montage am Rahmen keine direkte stofffeste Verbindung der beiden Teile. Es kann somit keine direkte Ausrichtung der beiden Halterteile zueinander erfolgen. Aufgrund Toleranzen der Montagelehre ist eine große Montagetoleranz zu erwarten welche durch einen zu großen Abstand der beiden Halterteile zu einem Ausfall des Haltesystems führen kann. Ein Verziehen des Fahrradrahmens sowie eine unebene Auflagefläche der beiden Halterteile kann ebenfalls zu einer nicht optimalen Ausrichtung führen.

Aus dem deutschen Gebrauchsmuster DE 20 2014 009 732 U1 ist eine einteilige Batteriehalterung für ein Elektrofahrrad bekannt. Zwei Halteelemente sind dabei mit einem Montagestreifen miteinander verbunden. Der Montagestreifen weist Durchgangslöcher zur Schraubmontage an einem Fahrradrahmenrohr auf. EP3130513A1 und CN204096021U offenbaren die Merkmale des Oberbegriffs des Anspruchs 1.

### Vorteile der Erfindung

Die Erfindung geht aus von einer Batteriehalterung für ein Elektrofahrrad mit einem ersten Halteelement und einem zweiten Halteelement zum Halten einer dazwischen angeordneten Batterie, wobei das erste Halteelement erste Befestigungsmittel zur Befestigung an einem Fahrradrahmen aufweist, wobei das zweite Halteelement zweite Befestigungsmittel zur Befestigung an dem Fahrradrahmen aufweist. Der Kern der Erfindung besteht darin, dass die Batteriehalterung eine Montagelehre aufweist, welche mit dem ersten Halteelement und dem zweiten Halteelement verbunden ist, derart, dass ein Abstand oder auch eine Ausrichtung des ersten Halteelements und des zweiten Halteelements zueinander vorgegeben sind.

Nach der Erfindung sind die Montagelehre vom ersten oder auch vom zweiten Halteelement lösbar ausgestaltet. Somit kann die Montagelehre entfernt werden, sobald das erste Halteelement und das zweite Halteelement fest an einem Fahrradrahmen montiert sind.

Nach der Erfindung weist die Montagelehre in der Nähe des ersten Halteelements oder auch des zweiten Halteelements eine Sollbruchstelle auf. Eine vorteilhafte Ausgestaltung der Erfindung sieht vor, dass die Montagelehre bandförmig ausgestaltet ist. Vorteilhaft kann die Montagelehre so Abstand und Ausrichtung des ersten Halteelements und des zweiten Halteelements zueinander bestimmen. Vorteilhaft kann außerdem die Montagelehre auch bei in die Batteriehalterung eingesetzter Batterie mit dem ersten Halteelement und dem zweiten Halteelement verbunden bleiben.

Eine vorteilhafte Ausgestaltung der Erfindung sieht vor, dass die Montagelehre drahtförmig ausgestaltet ist. Vorteilhaft lässt sich die Montagelehre so besonders materialsparend realisieren. Vorteilhaft lässt sich die Montagelehre so auch besonders leicht entfernen, beispielsweise mit einem Drahtschneider.

Eine vorteilhafte Ausgestaltung der Erfindung sieht vor, dass die Montagelehre flexibel ist.

### Zeichnung

Figur 1 zeigt eine einteilige Batteriehalterung im Stand der Technik.
Figur 2 zeigt in einem ersten Ausführungsbeispiel eine erfindungsgemäße Batteriehalterung für ein Elektrofahrrad.
Figur 3 a und b zeigt in einem zweiten Ausführungsbeispiel eine erfindungsgemäße Batteriehalterung für ein Elektrofahrrad.

### Beschreibung

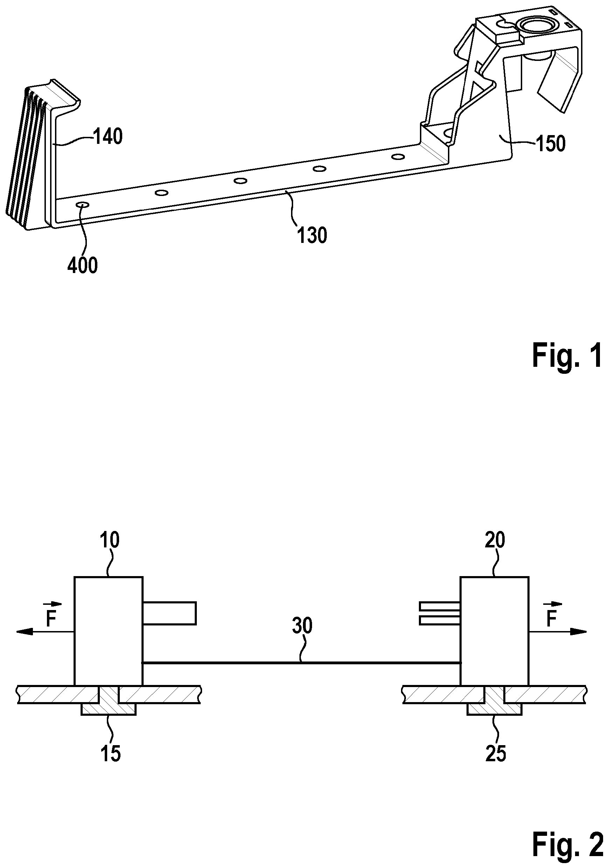

Figur 1 zeigt eine einteilige Batteriehalterung für ein Elektrofahrrad im druckschriftlichen Stand der Technik DE 202014009732 U1. Zwei Halteelemente 140, 150 zum Halten einer dazwischen angeordneten Batterie sind mit einem Montagestreifen 130 miteinander verbunden. Der Montagestreifen weist Durchgangslöcher 400 zur Schraubmontage an einem Fahrradrahmenrohr auf.

Figur 2 zeigt in einem ersten Ausführungsbeispiel eine erfindungsgemäße Batteriehalterung für ein Elektrofahrrad. Die Batteriehalterung weist ein erstes Halteelement 10 und ein zweites Halteelement 20 zum Halten einer dazwischen angeordneten Batterie auf. Das erste Halteelement 10 weist erste Befestigungsmittel 15 zur Befestigung an einem Fahrradrahmen auf. Das zweite Halteelement 20 weist zweite Befestigungsmittel 25 zur Befestigung an dem Fahrradrahmen auf. Die Batteriehalterung weist erfindungsgemäß eine Montagelehre 30 auf, welche mit dem ersten Halteelement 10 und dem zweiten Halteelement 20 verbunden ist, derart, dass ein Abstand oder auch eine Ausrichtung des ersten Halteelements 10 und des zweiten Halteelements 20 zueinander vorgegeben sind.

Die Montagelehre 30 kann durch eine flexible Verbindung des ersten Halteelements mit dem zweiten Halteelement gestaltet sein. Diese flexible Verbindung (ähnlich wie ein Maßband oder eine Schnur) kann sich biegen, drehen und stauchen lassen- jedoch kann eine Ausrichtung auf eine mechanische Zugbelastung mit einer Kraft F längs einer Haupterstreckungsrichtung der Batteriehalterung erfolgen.

Während der Befestigung am Rahmen müssen die beiden Halteelemente 10, 20 auseinandergezogen werden. Der Abstand der beiden Halteelemente 10, 20 richtet sich daher nach der Länge der Verbindung in Form der Montagelehre 30 aus.

Die beiden Halteelemente 10, 20 werden aufgrund der definierte Länge der Verbindung in einem definierten Zustand zueinander positioniert und ausgerichtet.

Die Verbindung definiert den Abstand der beiden Halteelemente 10, 20 zueinander. Nach der festen Anbringen der beiden Halteelemente 10, 20 kann die Verbindung aufgrund ihrer geringen Materialstärke entfernt werden. Die Montagelehre 30 kann drahtförmig, einadrig oder auch mehradrig gedreht oder geflochten wie eine Schnur sein.

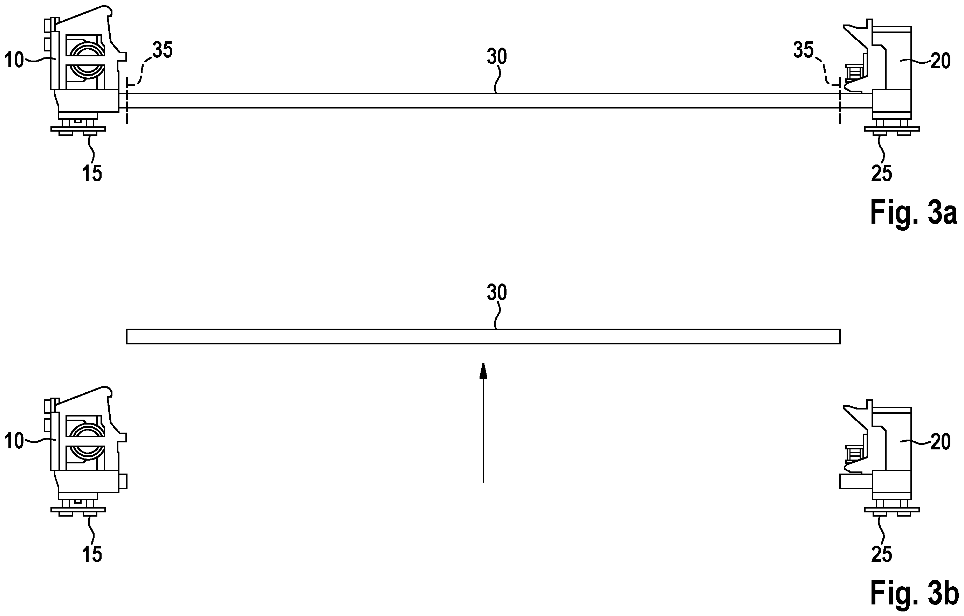

Figur 3 a und b zeigt in einem zweiten Ausführungsbeispiel eine erfindungsgemäße Batteriehalterung für ein Elektrofahrrad. Figur 3 a zeigt ein erstes Halteelement 10 mit einem mechanischen Schließmechanismus und ein zweites Halteelement 20 mit einem elektrischen Kontaktstecker. Eine bandförmige Montagelehre 30 ist mit dem ersten Halteelement 10 und dem zweiten Halteelement 20 verbunden. Die Montagelehre 30 weist jeweils in der Nähe des ersten und zweiten Halteelements 10, 20 eine Sollbruchstelle 35 auf.

Figur 3 b zeigt die Batteriehalterung aus Figur 3 a nach Entfernen der Montagelehre. Das Entfernen der Montagelehre 30 wird durch die Sollbruchstellen 35 unterstützt. Die Sollbruchstellen 35 sind dazu beispielsweise in Form einer Perforierung der bandförmigen Montagelehre 30 ausgeführt.

Alternativ bleibt die Montagelehre 30 verbaut und ist insbesondere bei einer entnommenen Batterie sichtbar.

### Bezugszeichenliste

- 10: erstes Halteelement
- 15: erste Befestigungsmittel
- 20: zweites Halteelement
- 25: zweite Befestigungsmittel
- 30: Montagelehre
- 35: Sollbruchstelle

- 130: Montagestreifen
- 140: erstes Halteelement einer einteiligen Batteriehalterung
- 150: zweites Halteelement einer einteiligen Batteriehalterung
- 400: Durchgangsloch

## Patentansprüche

1. Batteriehalterung für ein Elektrofahrrad mit einem ersten Halteelement (10) und einem zweiten Halteelement (20) zum Halten einer dazwischen angeordneten Batterie,
- wobei das erste Halteelement (10) erste Befestigungsmittel (15) zur Befestigung an einem Fahrradrahmen aufweist,
- wobei das zweite Halteelement (20) zweite Befestigungsmittel (25) zur Befestigung an dem Fahrradrahmen aufweist,
wobei die Batteriehalterung eine Montagelehre (30) aufweist, welche mit dem ersten Halteelement (10) und dem zweiten Halteelement (20) verbunden ist, derart, dass ein Abstand und/oder eine Ausrichtung des ersten Halteelements (10) und des zweiten Halteelements (20) zueinander vorgegeben sind,
wobei
die Montagelehre (30) vom ersten Halteelement (10) und/oder vom zweiten Halteelement (20) lösbar ausgestaltet ist und **dadurch gekennzeichnet, dass**
die Montagelehre (30) in der Nähe des ersten Halteelements (10) und/oder des zweiten Halteelements (20) eine Sollbruchstelle (35) aufweist.

2. Batteriehalterung nach Anspruch 1, **dadurch gekennzeichnet, dass** die Montagelehre (30) bandförmig ausgestaltet ist.

3. Batteriehalterung nach einem der vorhergehenden Ansprüche 1 oder 2, **dadurch gekennzeichnet, dass** die Montagelehre (30) drahtförmig ausgestaltet ist.

4. Batteriehalterung nach einem der vorhergehenden Ansprüche, **dadurch gekennzeichnet, dass** die Montagelehre (30) flexibel ist.

## Claims

1. Battery mount for an electric bicycle, having a first holding element (10) and a second holding element (20) for holding a battery arranged in between,
- wherein the first holding element (10) has first fastening means (15) for fastening to a bicycle frame,
- wherein the second holding element (20) has second fastening means (25) for fastening to the bicycle frame,
wherein the battery mount has a mounting gauge (30) which is connected to the first holding element (10) and the second holding element (20) such that a spacing and/or an orientation of the first holding element (10) and the second holding element (20) with respect to one another are predefined,
wherein
the mounting gauge (30) is designed to be detachable from the first holding element (10) and/or from the second holding element (20), and **characterized in that** the mounting gauge (30) has a predetermined breaking point (35) in the vicinity of the first holding element (10) and/or of the second holding element (20).

2. Battery mount according to Claim 1, **characterized in that** the mounting gauge (30) is in the form of a band.

3. Battery mount according to either of the preceding Claims 1 and 2, **characterized in that** the mounting gauge (30) is in the form of a wire.

4. Battery mount according to any of the preceding claims, **characterized in that** the mounting gauge (30) is flexible.

## Revendications

1. Support de batterie destiné à une bicyclette électrique comprenant un premier élément de retenue (10) et un deuxième élément de retenue (20) destiné à maintenir une batterie disposée entre ceux-ci,
- le premier élément de retenue (10) comportant des premiers moyens de fixation (15) destinés à la fixation à un cadre de bicyclette,
- le deuxième élément de retenue (20) comportant des deuxièmes moyens de fixation (25) destinés à la fixation au cadre de bicyclette,
le support de batterie comprenant un gabarit de montage (30) qui est relié au premier élément de support (10) et au deuxième élément de support (20) de sorte qu'une distance et/ou un alignement du premier élément de retenue (10) et du deuxième élément de retenue (20) soient prédéterminés l'un par rapport à l'autre,
le gabarit de montage (30) étant conçu pour être amovible du premier élément de retenue (10) et/ou du deuxième élément de retenue (20) et étant **caractérisé en ce que** le gabarit de montage (30) possède un point de rupture prédéterminé (35) à proximité du premier élément de retenue (10) et/ou du deuxième élément de retenue (20).

2. Support de batterie selon la revendication 1, **caractérisé en ce que** le gabarit de montage (30) est réalisé sous la forme d'une bande.

3. Support de batterie selon l'une des revendications précédentes 1 et 2, **caractérisé en ce que** le gabarit de montage (30) est conçu en forme de fil.

4. Support de batterie selon l'une des revendications précédentes, **caractérisé en ce que** le gabarit de montage (30) est flexible.
